# EUROPEAN PATENT APPLICATION

(11) **EP 3 560 978 A1**
(43) Date of publication of application: **30.10.2019**
(21) Application number: 19163348.6
(22) Date of filing: 18.03.2019
(51) Int. Cl.: C08G 59/02, C08G 59/42, C08G 65/40, C08G 75/23

(54) **HIGH HEAT THERMOSET EPOXY COMPOSITIONS**

(30) Priority: 26.04.2018 EP 18169589; 04.01.2019 US 201916239861
(71) Applicant: SABIC Global Technologies B.V., 4612 PX Bergen op Zoom (NL)
(72) Inventor: Agrawal, Mukesh, 562125 Bangalore, Karnataka (IN); Verghese, Nikhil K. E., Sugar Land, TX Texas 77478 (US)
(74) Representative: Modiano, Micaela Nadia

(57) **Abstract**

A thermoset epoxy composition, comprising the cured product of a thermosetting epoxy composition comprising: 100 parts by weight of an epoxy resin composition comprising one or more epoxy resins, each independently having an epoxy equivalent weight of at least 2; 30-200 parts by weight of an aromatic dianhydride curing agent of the formula 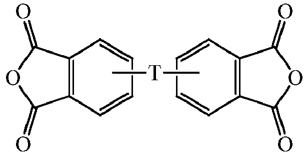 wherein T is as provided herein; and 0.1- 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1-4 ring heteroatoms, wherein each heteroatom is independently the same or different, and is nitrogen, oxygen, phosphorus, silicon, or sulfur, preferably nitrogen, oxygen, or sulfur, more preferably nitrogen, wherein the aromatic dianhydride curing agent is soluble in the epoxy resin composition, and the curable epoxy composition does not contain a monoanhydride.

## Description

### BACKGROUND

Thermoset polymers are used in a wide variety of consumer and industrial products including protective coatings, adhesives, electronic laminates (such as those used in the fabrication of printed circuit boards), flooring and paving, glass fiber-reinforced pipes, and automotive parts (such as leaf springs, pumps, and electrical components). Thermoset epoxies are derived from thermosetting epoxy resins that are polymerized in the presence of a co-reactive curing agent (also referred to in the art as a hardener), a catalytic curing agent (also referred to in the art as a cure accelerator or catalyst), or both, to afford a cured thermoset epoxy.

Anhydride curing agents can be used to provide higher heat properties, better electrical properties, longer pot life, and lower shrinkage to cured epoxies. Examples of anhydride curing agents include norbornene dicarboxylic anhydride, hexahydrophthalic anhydride, tetrahydrophthalic anhydride, phthalic anhydride, trimellitic anhydride, pyromellitic dianhydride, and benzophenone tetracarboxylic dianhydride. However, these anhydride curing agents can release undesirable heat during curing that can lead to shrinkage, and have long curing times. These anhydride curing agents further provide epoxy thermosets that can lack dimensional stability at temperatures higher than 220°C.

Accordingly, there remains a need in the art for cured epoxies for high heat applications.

### BRIEF SUMMARY

Provided is a thermoset epoxy composition including the cured product of a thermosetting epoxy composition comprising: 100 parts by weight of an epoxy resin composition comprising one or more epoxy resins, each independently having an epoxy equivalent weight of at least 2; 30 to 200 parts by weight of an aromatic dianhydride curing agent of the formula 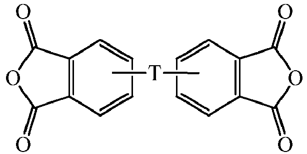 wherein T is -O-, -S-, -C(O)-, -SO₂-, -SO-, -C_{y}H_{2y}- wherein y is an integer from 1 to 5 or a halogenated derivative thereof,, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof; and 0.1 to 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen, wherein the aromatic dianhydride curing agent is soluble in the epoxy resin composition, and the curable epoxy composition does not comprise a monoanhydride.

Also provided are an article including the thermoset epoxy composition, a method for the manufacture of the article that includes shaping the curable epoxy composition; and curing the curable epoxy composition; preferably wherein the curing is a temperature of 300°C or less, preferably 100°C to 250°C, more preferably 120°C to 240°C, and for a time of 6 hours or less, preferably 1 to 6 hours, more preferably 3 to 5 hours.

The above described and other features are exemplified by the following detailed description and examples.

### DETAILED DESCRIPTION

This disclosure relates to a curable epoxy composition including an epoxy resin, an aromatic dianhydride as curing agent, and a heterocyclic accelerator (catalyst). The inventors have discovered that an aromatic dianhydride, for example bisphenol-A dianhydride (BPA-DA), can be a useful curing agent for making high heat cured epoxy resins when the aromatic dianhydride is soluble in the epoxy resin composition of the curable epoxy composition. The curable epoxy composition including the aromatic dianhydride as an epoxy curing agent can provide a cured thermoset product having good high heat resistance properties, such as a glass transition temperature that can be greater than 230°C. Moreover, the curing time and heat of polymerization when using the curable epoxy composition may be less than those of other curable epoxy compositions that do not include the aromatic dianhydride curing agent. The disclosed curable epoxy composition and the corresponding cured thermoset product can be used in a variety of high heat applications including but not limited to adhesives, coatings, epoxy tooling compositions, potting compositions, and fiber-reinforced composites.

Disclosed herein is a curable epoxy composition including 100 parts by weight of an epoxy resin composition comprising one or more epoxy resins, each independently having an epoxy equivalent weight of at least 2; 30 to 200 parts by weight of an aromatic dianhydride curing agent; and 0.1 to 5 parts by weight of a heterocyclic accelerator, based on the total parts by weight of the epoxy resin composition and the aromatic dianhydride curing agent. In the curable composition, the aromatic dianhydride curing agent is soluble in the epoxy resin composition, and the curable epoxy composition does not comprise a monoanhydride.

In particular aspects, the stoichiometric ratio between the aromatic dianhydride curing agent and the epoxy resin composition is 0.1:1 to 2.0:1, preferably 0.4:1 to 1.2:1, more preferably 0.6:1 to 1:1. The "stoichiometric ratio" is defined herein as the molar ratio of anhydride functionalities in the dianhydride curing agent to the epoxy functionalities in the epoxy resin composition. The stoichiometric ratio is also referred to herein as the anhydride to epoxy (A/E) ratio.

The curable epoxy composition can include 50 to 150, preferably 60 to 140, more preferably 80 to 120 parts by weight of the aromatic dianhydride curing agent; and 0.1 to 4, preferably 0.2 to 3, more preferably 0.5 to 2 parts by weight of the heterocyclic accelerator, based on the total parts by weight of the epoxy resin composition and the aromatic dianhydride curing agent.

The epoxy resin composition can include one or more epoxy resins. Exemplary epoxy resins include bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof. For example, the epoxy resin can be bisphenol-A diglycidyl ether (BPA-DGE).

The aromatic dianhydride can be of the formula (1) 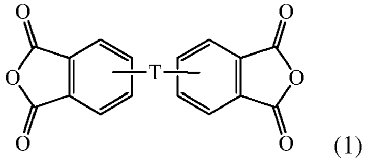 wherein T is -O-, -S-, -C(O)-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof. For example, R¹ can be a monovalent C₁₋₁₃ organic group. For example, T is -O- or a group of the formula -O-Z-O- wherein the divalent bonds of the -O- or the -O-Z-O-group are in the 3,3', 3,4', 4,3', or the 4,4' positions. In particular aspects, T is as defined above but is not -C(O)-.

Exemplary groups Z include groups of formula (2) 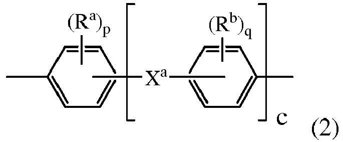 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of the formula (3a) or (3b) 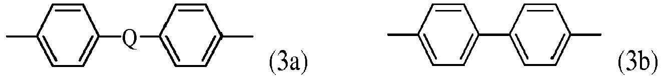 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). For example, Q can be 2,2-isopropylidene. For example, T can be -O-Z-O-, preferably wherein Z is derived from bisphenol A (i.e., Z is 2,2- (4-phenylene)isopropylidene).

Illustrative examples of aromatic dianhydrides include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4-(2,3-dicarboxyphenoxy)-4'-(3,4-dicarboxyphenoxy)diphenyl sulfone dianhydride, or a combination thereof. For example, the aromatic dianhydride curing agent can be bisphenol-A dianhydride.

The aromatic dianhydride curing agent is soluble in the epoxy resin composition. The term "soluble in the epoxy resin composition" means that there is a temperature range where a combination of the aromatic dianhydride and the epoxy resin composition can be combined to form a homogeneous phase. As used herein, "forming a homogeneous phase" means creating a state where there is no visible separation between the components. The homogeneous phase can be formed in a certain temperature range without regard to any separation that may occur outside of that temperature range, for example, at room temperature. For example, a combination of the aromatic dianhydride and the epoxy resin composition can be stirred, heated, or heated under stirring to form a homogeneous phase.

The aromatic dianhydride can be soluble in the epoxy resin composition at a temperature from 50 to 200°C. For example, the aromatic dianhydride can be soluble in the epoxy resin composition from 80 to 200°C, more preferably from 100 to 190°C, even more preferably from 120 to 180°C.

The aromatic dianhydride can be soluble in the epoxy resin composition without the inclusion of any additives to improve the solubility of the dianhydride. Without being bound by theory, the use of solubility enhancing additives, such as solvents or monoanhydrides (e.g., fluxes), can result in a decrease in the high heat properties of the corresponding cured composition.

The curable epoxy composition does not contain a monohydride, which includes compounds such as fluxes and monoanhydride curing agents, such as those identified herein. The term "does not contain a monoanhydride" means the curable epoxy composition is free of a monoanhydride component and contains less than 100 parts per million by weight (ppm) of monoanhydride(s), based on the total weight of the curable epoxy composition. For example, the curable epoxy composition can have less 75 ppm, preferably less than 50 ppm, more preferably less than 25 ppm, even more preferably less than 10 ppm of monoanhydride(s).

The curable epoxy composition can be substantially free of solvent or solvents. The term "substantially free of solvent" means that the curable epoxy composition contains less than 500 parts per million by weight (ppm) of solvent. For example, the curable epoxy composition can have greater than 0 to 450 ppm, preferably greater than 0 to 300 ppm, more preferably greater than 0 to 200 ppm, even more preferably greater than 0 to 100 ppm of solvent.

The heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur. In an aspect, each heteroatom is independently the same or different, and is nitrogen, oxygen, or sulfur. In a preferred aspect, the 1 to 4 ring heteroatoms are each nitrogen.

Examples of heterocyclic accelerators include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane (DABCO), diazabicycloundecene (DBU), 2-phenyl imidazoline, or the like; N,N-dimethylaminopyridine (DMAP); sulfamidate; or a combination thereof.

The curable epoxy composition can include an additive composition. The additive composition can include a particulate filler, a fibrous filler, a reinforcing material, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, flame retardant synergists such as antimony pentoxide, an anti-drip agent, a fragrance, an adhesion promoter, a flow enhancer, a coating additive, a polymer different from the thermoset (epoxy) polymer, or a combination thereof. In a preferred aspect, the additive composition comprises a flame retardant, a particulate filler, a fibrous filler, an adhesion promoter, a flow enhancer, a coating additive, a colorant, or a combination thereof.

The additive composition can include a particulate filler. The particulate filler can include alumina powder, hydrated alumina powder, quartz powder or fused quartz powder, glass fibers, carbon fibers, or a combination thereof. The curable composition can include a fibrous substrate or filler (woven or non-woven) such as glass, quartz, polyester, polyimide, polypropylene, cellulose, carbon fibers and carbon fibrils, nylon or acrylic fibers, preferably a glass substrate, that can be impregnated with the curable composition (i.e., prepregs).

The curable epoxy composition can further include an additional cure accelerator different from the heterocyclic accelerator. The cure accelerator can be an amine cure accelerator, a term that also refers to amine curing agents and amine hardening accelerators. Amine cure accelerators include isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N' -bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3'-iminobispropylamine, 2,4-bis(p-aminobenzyl)aniline, tetraethylenepentamine, 3-diethylaminopropylamine, 2,2,4- and 2,4,4-trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, diethyl toluene diamines, or a combination thereof. The amine compound can be a tertiary amine hardening accelerator. The tertiary amine hardening accelerator can be selected from triethylamine, tributylamine, dimethylaniline, diethylaniline, benzyldimethylamine (BDMA), α-methylbenzyldimethylamine, *N*,*N*-dimethylaminoethanol, *N*,*N*-dimethylaminocresol, tri(*N*,*N*-dimethylaminomethyl)phenol, or a combination thereof. Amine cure accelerators also include acid-base complexes such as a boron trifluoride-trialkylamine complex. Alternatively, the curable epoxy composition does not comprise an amine cure accelerator or is free from an amine cure accelerator.

The additional cure accelerator can be a phenolic hardener. Exemplary phenolic hardener include novolac type phenol resins, resole type phenol resins, aralkyl type phenol resins, dicyclopentadiene type phenol resins, terpene modified phenol resins, biphenyl type phenol resins, bisphenols, triphenylmethane type phenol resins, or a combination thereof. Alternatively, the curable epoxy composition does not comprise a phenolic hardener or is free from a phenolic hardener.

The additional cure accelerator can be a latent cationic cure catalyst such as diaryliodonium salts, phosphonic acid esters, sulfonic acid esters, carboxylic acid esters, phosphonic ylides, triarylsulfonium salts, benzylsulfonium salts, aryldiazonium salts, benzylpyridinium salts, benzylammonium salts, isoxazolium salts, or a combination thereof. The diaryliodonium salt can have the structure [(R¹⁰)(R¹¹)I]⁺ X⁻, wherein R¹⁰ and R¹¹ are each independently a C₆-C₁₄ monovalent aromatic hydrocarbon radical, optionally substituted with from 1 to 4 monovalent radicals selected from C₁-C₂₀ alkyl, C₁-C₂₀ alkoxy, nitro, and chloro; and wherein X⁻ is an anion. The additional cure accelerator can have the structure [(R¹⁰)(R¹¹)I]⁺ SbF₆⁻, wherein R¹⁰ and R¹¹ are each independently a C₆-C₁₄ monovalent aromatic hydrocarbon radical, optionally substituted with from 1 to 4 monovalent radicals selected from C₁-C₂₀ alkyl, C₁-C₂₀ alkoxy, nitro, and chloro. For example the additional cure accelerator can be a latent cationic cure catalyst comprising 4-octyloxyphenyl phenyl iodonium hexafluoroantimonate. The latent cationic cure catalysts also include metal salts including copper (II), tin (II), and aluminum (III) salts of an aliphatic or aromatic carboxylic acid, such as acetate, stearate, gluconate, citrate, benzoate, and mixtures thereof; copper (II), tin (II), or aluminum (III) β -diketonates such as acetylacetonate. Alternatively, the curable epoxy composition does not comprise a latent cationic cure catalyst or is free from a latent cationic cure catalyst.

The curable epoxy composition contains no monoanhydride component (i.e., does not comprise a monoanhydride curing agent or is free of monoanhydride), as defined above. As used herein, monoanhydrides include monoanhydride curing agents and also refers to reactive diluents that include a monoanhydride functionality. For example, monoanhydrides include norbornene dicarboxylic anhydrides (e.g., methyl-5-norbornene-2,3-dicarboxylic anhydride, or the like), hexahydrophthalic anhydrides (e.g., 1,2-cyclohexanedicarboxylic anhydride, 4-methylhexahydrophthalic anhydride, 5-methylhexahydrophthalic anhydride, or the like), tetrahydrophthalic anhydrides (e.g., 1,2,3,6-tetrahydrophthalic anhydride, 1,2,3,6-tetrahydro-4-methylphthalic anhydride, or the like), phthalic anhydrides (e.g., 3-fluorophthalic anhydride), maleic anhydrides (e.g., 2-methylmaleic anhydride, dimethylmaleic anhydride, or the like), succinic anhydrides (e.g., dodecenylsuccinic anhydride, hexadecenylsuccinic anhydride, or the like), trimellitic anhydride, perfluoroglutaric anhydride, a combination thereof, or the like.

The curable composition can further include a poly(phenylene ether) copolymer. The poly(phenylene ether) copolymer is ideally suited as a reactive component in the curable composition because it is bifunctional, with two reactive phenolic groups. For example, the curable epoxy composition can further include 1 to 100 parts by weight of the poly(phenylene ether) copolymer.

The curable epoxy composition can be manufactured by combining the epoxy resin composition and the aromatic dianhydride curing agent at a temperature of 100°C to 200°C, preferably 120°C to 190°C, more preferably 130°C to 180°C to provide a reaction mixture. The reaction mixture can subsequently be cooled to less than 100°C, and the heterocyclic accelerator can be added to the reaction mixture, to provide the curable epoxy composition.

The reaction mixture can include no solvents or reactive diluents. Alternatively, the reaction mixture can further include a solvent with the proviso that the solvent does not render an otherwise insoluble aromatic dianhydride soluble in the epoxy resin composition.

For example, the solvent can be C₃₋₈ ketones, C₄₋₈ *N,N*-dialkylamides, C₄₋₁₆ dialkyl ethers, C₆₋₁₂ aromatic hydrocarbons, C₃₋₆ alkyl alkanoates, C₂₋₆ alkyl nitriles, C₂₋₆ dialkyl sulfoxides, or a combination thereof. Examples of C₃₋₈ ketones include acetone, methyl ethyl ketone, methyl isobutyl ketone, and combinations thereof. Examples of C₄₋₈ *N,N*-dialkylamides include dimethylformamide, dimethylacetamide, *N*-methyl-2-pyrrolidone, and combinations thereof. Examples of C₄₋₁₆ dialkyl ethers include tetrahydrofuran, dioxane, and combinations thereof. The C₄₋₁₆ dialkyl ether can optionally further include one or more ether oxygen atoms within the alkyl groups and one or more hydroxy substituents on the alkyl groups, for example the C₄₋₁₆ dialkyl ether can be ethylene glycol monomethyl ether. The aromatic hydrocarbon solvent can be an ethylenically unsaturated solvent. Examples of C₆₋₁₂ aromatic hydrocarbons include benzene, toluene, xylenes, styrene, divinylbenzenes, and combinations thereof. Examples of C₃₋₆ alkyl alkanoates include methyl acetate, ethyl acetate, methyl propionate, ethyl propionate, and combinations thereof. Examples of C₂₋₆ alkyl cyanides include acetonitrile, propionitrile, butyronitrile, and combinations thereof. Examples of C₂₋₆ dialkyl sulfoxides include dimethyl sulfoxide, methyl ethyl sulfoxide, diethyl sulfoxide, and combinations thereof. For example, the solvent can be acetone, methyl ethyl ketone, *N*-methyl-2-pyrrolidone, toluene, or a combination thereof. For example, the solvent can be a halogenated solvent such as methylene chloride, chloroform, 1,1,1-trichloroethane, chlorobenzene, or the like.

The thermoset epoxy composition can exhibit a single glass transition temperature (Tg), such as a single Tg greater than or equal to 170°C, preferably greater than or equal to 180°C, more preferably greater than or equal to 200°C, or 220°C, or 240°C. For example, the thermoset epoxy composition can have a single Tg of 200°C to 280°C, preferably 210°C to 270°C, more preferably 220°C to 270°C, even more preferably 230°C to 270°C. The glass transition temperature can be determined using dynamic mechanical analysis (DMA) analyzed at -40°C to 300°C with a temperature ramp of 3°C/min. Alternatively, Tg can be determined using differential scanning calorimetry (DSC) analyzed at 23 to 300°C with a heating rate of 10 °C/minute or 20 °C/minute.

The method for the manufacture of a thermoset epoxy composition can include curing the curable epoxy composition. There is no particular limitation on the method by which the composition may be cured. The composition may, for example, be cured thermally or by using irradiation techniques, including UV irradiation and electron beam irradiation. When heat curing is used, the temperature selected can be 80 °C to 300 °C, and preferably 120 °C to 240 °C. The heating period can be 1 minute to 10 hours, though such heating period can advantageously be 1 minute to 6 hours, more preferably 3 hours to 5 hours. Such curing can be staged to produce a partially cured and often tack-free resin, which then is fully cured by heating for longer periods or temperatures within the aforementioned ranges.

The curable epoxy composition can be cured by compression molding, injection molding, transfer molding, pultrusion, resin casting, or a combination thereof. For example, the curable epoxy composition can be disposed in, for example injected into, a mold and then cured at 150 to 250°C in the mold. Various molded articles or components can be prepared in this manner, including those described herein.

The resulting thermoset epoxy composition after curing can be clear and/or transparent. For example, thermoset epoxy composition after curing has a total transmission of greater than 50%, preferably greater than 70%, more preferably greater than 90%.

The thermoset epoxy composition can exhibit good ductility, good fracture toughness, unnotched Izod impact strength, and good tensile elongation.

The thermoset epoxy composition can exhibit increased char formation on pyrolysis.

The thermoset epoxy composition can exhibit low moisture absorption.

The thermoset epoxy composition can exhibit decreased shrinkage upon curing.

The thermoset epoxy composition can exhibit decreased dielectric properties.

The disclosed epoxides, curable compositions, and cured compositions can be used in a variety of applications and articles, including any applications where conventional epoxides are currently used. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When used as a coating, the compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container, such as those commonly used for packaging and containment in the paint and surface covering industries. In some instances the coated metal is aluminum or steel.

For example, articles can be manufactured by shaping the curable epoxy composition; and curing the curable epoxy composition as provided herein. Exemplary methods for shaping and/or curing the curable epoxy composition include compression molding, injection molding, transfer molding, pultrusion, resin casting, or a combination thereof. For example, the shaping and curing can include disposing the curable epoxy composition into a mold, and curing the curable epoxy composition at 150°C to 250°C in the mold.

Articles that can be prepared using the disclosed curable compositions include, for example, electrical components and computer components. Articles that can be prepared using the disclosed curable compositions include, for example, automotive, aircraft, and watercraft exterior and interior components. The articles can be in the form of in the form of a composite, a foam, a fiber, a layer, a coating, an encapsulant, an adhesive, a sealant, a component, a prepreg, a casing, or a combination thereof. The disclosed curable compositions can be used for the production of composite materials for use in the aerospace industry. The curable composition can be used in forming composites used for printed circuit boards. Methods of forming composites for use in printed circuit boards are known in the art and are described in, for example, U.S. Pat. No. 5,622,588 to Weber, U.S. Pat. No. 5,582,872 to Prinz, and U.S. Pat. No. 7,655,278 to Braidwood.

Additional applications for the curable compositions include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cutoff devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Methods of forming a composite can include impregnating a reinforcing structure with a curable composition; partially curing the curable composition to form a prepreg; and laminating a plurality of prepregs.

Reinforcing structures suitable for prepreg formation are known in the art. Suitable reinforcing structures include reinforcing fabrics. Reinforcing fabrics include those having complex architectures, including two or three-dimensional braided, knitted, woven, and filament wound. The curable composition is capable of permeating such complex reinforcing structures. The reinforcing structure can comprise fibers of materials known for the reinforcement of plastics material, for example fibers of carbon, glass, metal, and aromatic polyamides. Exemplary reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria well known to those skilled in the production of fiber reinforced resin composites. The reinforced structure can contain various finishes suitable for the epoxy matrix.

The method of forming the composite includes partially curing the curable composition after the reinforcing structure has been impregnated with it. Partial curing is curing sufficient to reduce or eliminate the wetness and tackiness of the curable composition but not so great as to fully cure the composition. The resin in a prepreg is customarily in the partially cured state, and those skilled in the thermoset arts, and particularly the reinforced composite arts, understand the concept of partial curing and how to determine conditions to partially cure a resin without undue experimentation. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. For example, one can analyze a sample by differential scanning calorimetry to look for an exotherm indicative of additional curing occurring during the analysis. A sample that is partially cured will exhibit an exotherm. A sample that is substantially fully cured will exhibit little or no exotherm. Partial curing can be effected by subjecting the curable-composition-impregnated reinforcing structure to a temperature of 133 to 140°C for 4 to 10 minutes.

Commercial-scale methods of forming composites are known in the art, and the curable compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable composition. The varnish impregnates the reinforcing structure. After emerging from the tank, the coated reinforcing structure moves upward through the vertical treater oven, which is typically at a temperature of 175 to 200°C, and the solvent of the varnish is boiled away. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

While the above-described curing methods rely on thermal curing, it is also possible to effect curing with radiation, including ultraviolet light and electron beams. Combinations of thermal curing and radiation curing can also be used.

In some aspects, a method for the manufacture of the article includes shaping the curable epoxy composition; and curing the curable epoxy composition. Preferably shaping and curing the curable epoxy composition is by compression molding, injection molding, transfer molding, pultrusion, resin casting, or a combination thereof. Processes generally useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay-up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. In certain aspects, an article can be prepared from the disclosed curable compositions via a resin transfer molding process.

This disclosure is further illustrated by the following examples, which are nonlimiting.

### EXAMPLES

Materials used in the examples are described in Table 1.

**Table 1**

| Component | Description | Source |
|---|---|---|
| BPA-DGE | DER 332: Diglycidyl ether of bisphenol A, CAS Reg. No. 1675-54-3. | Dow Chemical |
| BPA-DA | Bisphenol-A dianhydride, CAS Reg. No. 38103-06-9. | SABIC |
| PMDA | Benzene-1,2,4,5-tetracarboxylic dianhydride (pyromellitic dianhydride), CAS Reg. No. 89-32-7. | Sigma-Aldrich |
| 2,4-EMI | 2-Ethyl-4-methylimidazole, CAS Reg. No. 931-36-2. | Sigma-Aldrich |
| BPDA | 3,3',4,4'-Biphenyltetracarboxylic dianhydride, CAS Reg. No. 2420-87-3. | Sigma-Aldrich |
| NMA | Methyl-5-norbornene-2,3-dicarboxylic anhydride, CAS Reg. No. 25134-21-8. | Sigma-Aldrich |

### Sample Preparation

### Example 1

BPA-DGE is combined with PMDA at an anhydride to epoxy (A/E) ratio of 0.6:1 and mixed at 23°C. Partial dissolution of the PMDA in the BPA-DGE results in a heterogeneous reaction mixture having a light yellow color, with a substantial amount of solid PMDA particles remaining undissolved in the BPA-DGE. 1 wt% of 2,4-EMI was added while stirring. The resulting mixture was poured into a preheated mold (130°C) and then cured in the mold at 150°C for 30 minutes, 175°C for 30 minutes, 200°C for 30 minutes, and 220°C for 90 minutes. A rigid and cured resin with undissolved PMDA particles is afforded.

### Example 2

BPA-DGE is heated at 160°C and then combined with PMDA at an A/E ratio of 0.6:1 with mixing. Partial dissolution of the PMDA in the BPA-DGE results in a heterogeneous reaction mixture having a light yellow color, with a substantial amount of solid PMDA particles remaining undissolved in the BPA-DGE. The reaction mixture is then cooled to 90°C, and 1 wt% of 2,4-EMI was added with stirring. The resulting mixture was poured into a preheated mold (130°C) and then cured in the mold at 150°C for 30 minutes, 175°C for 30 minutes, 200°C for 30 minutes, and 220°C for 90 minutes. A rigid and cured resin with undissolved PMDA particles is afforded.

### Example 3

BPA-DGE is combined with BPDA at an A/E ratio of 0.6:1 and mixed at 23°C. The resulting reaction mixture is a light grey colored heterogeneous paste having a substantial amount of solid BPDA particles remaining undissolved in the BPA-DGE. 1 wt% of 2,4-EMI was added while stirring. The resulting mixture was poured into a preheated mold (130°C) and then cured in the mold at 150°C for 30 minutes, 175°C for 30 minutes, 200°C for 30 minutes, and 220°C for 90 minutes. A rigid and cured resin with undissolved BPDA particles is afforded.

### Example 4

BPA-DGE is heated at 160°C and then combined with BPDA at an A/E ratio of 0.6:1 with mixing. The resulting reaction mixture is a light grey colored heterogeneous paste having a substantial amount of solid BPDA particles remaining undissolved in the BPA-DGE. The reaction mixture is then cooled to 90°C, and 1 wt% of 2,4-EMI was added with stirring. The resulting mixture was poured into a preheated mold (130°C) and then cured in the mold at 150°C for 30 minutes, 175°C for 30 minutes, 200°C for 30 minutes, and 220°C for 90 minutes. A rigid and cured resin with undissolved BPDA particles is afforded.

### Example 5

BPA-DGE is combined with BPA-DA at an A/E ratio of 0.6:1 and mixed at 23°C. The resulting reaction mixture is a grey colored heterogeneous paste. 1 wt% of 2,4-EMI was added while stirring. The resulting mixture was poured into a preheated mold (130°C) and then cured in the mold at 150°C for 30 minutes, 175°C for 30 minutes, 200°C for 30 minutes, and 220°C for 90 minutes. A rigid and cured resin with undissolved BPA-DA particles is afforded.

### Example 6

BPA-DGE is heated at 160°C and then combined with BPA-DA at an A/E ratio of 0.6:1 with mixing. The resulting reaction mixture is a homogenous, transparent mixture. The reaction mixture is then cooled to 90°C, and 1 wt% of 2,4-EMI was added with stirring. The resulting mixture was poured into a preheated mold (130°C) and then cured in the mold at 150°C for 30 minutes, 175°C for 30 minutes, 200°C for 30 minutes, and 220°C for 90 minutes. A rigid and clear casting is afforded.

### Example 7

BPA-DA is combined with NMA at a molar ratio of 60:40 and mixed at 23°C. The resulting reaction mixture is then heat to 130°C to afford a homogenous, clear mixture. The reaction mixture is then cooled to 90°C, BPA-DGE is added at an A/E ratio of 0.6:1 with stirring, and then 1 wt% of 2,4-EMI was added with stirring. The resulting mixture was poured into a preheated mold (130°C) and then cured in the mold at 150°C for 30 minutes, 175°C for 30 minutes, 200°C for 30 minutes, and 220°C for 90 minutes. A rigid and clear casting is afforded.

### Example 8

BPA-DGE is combined with NMA at an A/E ratio of 0.6:1 and mixed at 23°C, and then 1 wt% of 2,4-EMI was added while stirring. The resulting mixture was heated to 90°C and then poured into a preheated mold (130°C). Curing was accomplished in the mold at 150°C for 30 minutes, 175°C for 30 minutes, 200°C for 30 minutes, and 220°C for 90 minutes. A rigid and clear casting is afforded.

### Sample Analysis

The glass transition temperature (Tg) was determined by dynamic mechanical analysis (DMA) using an RDA III DMA from Rheometric Scientific. Sample bars were prepared (40 mm length, 4 mm width, and 6 mm thickness) and analyzed at -40°C to 300°C with a temperature ramp of 3°C/min and at a frequency of 6.283 radians per second

The enthalpy of the curing reaction and peak temperature were obtained by differential scanning calorimetry (DSC) on a Discovery DSC from TA Instruments. Samples were analyzed at 23 to 300°C with a heating rate of 20°C/minute under a nitrogen atmosphere.

Table 2 shows the processing parameters, appearance, and Tg (°C) for Examples 1 to 8.

**Table 2**

| | Epoxy resin | Curing agent | Flux | Mixing Temperature (°C) | Appearance | Tg (°C) |
|---|---|---|---|---|---|---|
| Example 1 | BPA-DGE | PMDA | - | 23 | Opaque | - |
| Example 2 | BPA-DGE | PMDA | - | 160 | Opaque | - |
| Example 3 | BPA-DGE | BPDA | - | 23 | Opaque | - |
| Example 4 | BPA-DGE | BPDA | - | 160 | Opaque | - |
| Example 5 | BPA-DGE | BPA-DA | - | 23 | Opaque | - |
| Example 6 | BPA-DGE | BPA-DA | - | 160 | Clear | 252 |
| Example 7 | BPA-DGE | BPA-DA | NMA | 90 | Clear | 226 |
| Example 8 | BPA-DGE | NMA | | 90 | Clear | 177 |

Examples 1 to 5 did not afford clear castings. These results suggest that PMDA and BPDA have poor solubility in BPA-DGE even at higher temperature (160°C) and thus cannot be used as curing agents to achieve high heat epoxy formulations. The uncured PMDA and BPDA pre-resins also undergo gelation on prolonged heating at 160°C. The same results are observed when the pre-resins are heated at temperatures greater than 160°C (data not shown).

Examples 6 and 7 were both rigid and clear castings having glass transition temperatures of greater than 225°C by DMA. In Example 7, the addition of the monoanhydride flux (NMA) lead to increased solubility of the epoxy resin and the curing agent, but a decrease in Tg at the same A/E ratio. In Example 8, when only NMA is used as a curing agent, a rigid and clear casting was afforded having a glass transition temperature that was considerably lower than Examples 6 and 7.

This disclosure further encompasses the following aspects.
Aspect 1. A thermoset epoxy composition comprises a cured product of a curable epoxy composition comprising: 100 parts by weight of an epoxy resin composition comprising one or more epoxy resins, each independently having an epoxy equivalent weight of at least 2; 30 to 200 parts by weight of an aromatic dianhydride curing agent of the formula 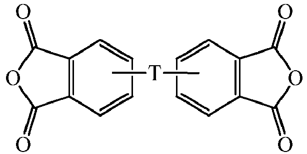 wherein T is -O-, -S-, -C(O)-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof; and 0.1 to 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen, wherein the aromatic dianhydride curing agent is soluble in the epoxy resin composition, and the curable epoxy composition does not comprise a monoanhydride.
Aspect 1a: The thermoset epoxy composition according to aspect 1, wherein T is -O-, -S-, -SO₂-, -SO-, -C_{y}H_{2y}- wherein y is an integer from 1 to 5 or a halogenated derivative thereof, or -O-Z-O- , and wherein Z is as defined in aspect 1.
Aspect 1b: The thermoset epoxy composition according to aspect 1 or 2, wherein the curable epoxy composition does not comprise a monoanhydride that is one or more of a substituted or unsubstituted norbornene dicarboxylic anhydride, a substituted or unsubstituted hexahydrophthalic anhydride, a substituted or unsubstituted tetrahydrophthalic anhydride, a substituted or unsubstituted phthalic anhydride, a substituted or unsubstituted maleic anhydride, a substituted or unsubstituted succinic anhydride, a substituted or unsubstituted trimellitic anhydride, and perfluoroglutaric anhydride; preferably wherein the curable composition does not comprise methyl-5-norbornene-2,3-dicarboxylic anhydride, 2-cyclohexanedicarboxylic anhydride, 4-methylhexahydrophthalic anhydride, 5-methylhexahydrophthalic anhydride, 1,2,3,6-tetrahydrophthalic anhydride, 1,2,3,6-tetrahydro-4-methylphthalic anhydride, phthalic anhydride, 3-fluorophthalic anhydride, 2-methylmaleic anhydride, maleic anhydride, dimethylmaleic anhydride, dodecenylsuccinic anhydride, hexadecenylsuccinic anhydride, trimellitic anhydride, perfluoroglutaric anhydride, or any combination thereof.
Aspect 1c: The thermoset epoxy composition according to any one or more of the preceding aspects, wherein the curable epoxy composition does not further comprise an amine cure accelerator, a phenolic hardener, a latent cationic cure catalyst, or a combination thereof.
Aspect 1d: The thermoset epoxy composition according to any one or more of the preceding aspects, wherein the aromatic dianhydride is soluble in the epoxy resin composition at a temperature from 50°C to 200°C, preferably 80°C to 200°C, more preferably 100°C to 190°C, even more preferably 120°C to 180°C.
Aspect 2: The thermoset epoxy composition according to aspect 1, wherein the curable epoxy composition is substantially free of solvent.
Aspect 3: The thermoset epoxy composition according to aspect 1 or aspect 2, wherein a stoichiometric ratio between the aromatic dianhydride curing agent and the epoxy resin composition is 0.1:1 to 2.0:1, preferably 0.4:1 to 1.2:1, more preferably 0.6:1 to 1:1.
Aspect 4: The thermoset epoxy composition according to any one or more of the preceding aspects, wherein the epoxy resin composition comprises a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof.
Aspect 5: The thermoset epoxy composition according to any one or more of the preceding aspects, wherein T is -O- or a group of the formula -O-Z-O- wherein Z is of the formula 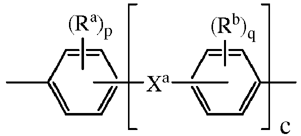 wherein R^{a} and R^{b} are each independently the same or different, and are a halogen atom or a monovalent C₁₋₆ alkyl group, X^{a} is a single bond, -O-, -S-, -S(O)-, -S(O)₂-, -C(O)-, or a C₁₋₁₈ organic bridging group, and p, q, and c are each independently integers of 0 to 4.
Aspect 6: The thermoset epoxy composition according to aspect 5, wherein Z is a divalent group of formula 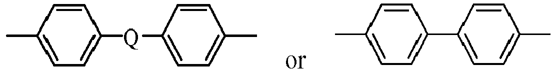 wherein Q is -O-, -S-, -C(O)-, -SO₂-, -SO-, -P(R^{c})(=O)- wherein R^{c} is a C₁₋₈ alkyl or C₆₋₁₂ aryl, or -C_{y}H_{2y}- wherein y is an integer from 1 to 5 or a halogenated derivative thereof, preferably wherein Q is 2,2-isopropylidene.
Aspect 6a: The thermoset epoxy composition according to any one or more of the preceding aspects, wherein the epoxy resin composition comprises bisphenol-A diglycidyl ether and the aromatic dianhydride curing agent comprises bisphenol-A dianhydride.
Aspect 7: The thermoset epoxy composition according to any one or more of the preceding aspects, wherein the heterocyclic accelerator comprises a C₃₋₄ five-membered ring wherein the ring heteroatoms are one or two nitrogen atoms; preferably a C₃ five-membered ring wherein the ring heteroatoms are nitrogen atoms.
Aspect 8: The thermoset epoxy composition according to any one or more of the preceding aspects, wherein the curable epoxy composition further comprises at least one of a cure accelerator different from the heterocyclic cure accelerator; or an additive composition, preferably wherein the additive composition comprises a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the thermoset polymer, or a combination thereof; more preferably wherein the additive composition comprises a flame retardant, a particulate filler, a fibrous filler, an adhesion promoter, a flow enhancer, a coating additive, a colorant, or a combination thereof.
Aspect 8a: The thermoset epoxy composition according to any one or more of the preceding aspects, wherein the composition does not further comprise an amine cure accelerator, a phenolic hardener, a latent cationic cure catalyst, or a combination thereof.
Aspect 9: The thermoset epoxy composition according to any one or more of the preceding aspects, wherein the curable epoxy composition is manufactured by: combining the epoxy resin composition and the aromatic dianhydride curing agent at a temperature of 100 to 200°C, preferably 120 to 190°C, more preferably 130 to 180°C to provide a reaction mixture; cooling the reaction mixture to less than 100°C; and adding the heterocyclic accelerator to the reaction mixture, to provide the curable epoxy composition; preferably wherein the reaction mixture is substantially free of solvent.
Aspect 10: The thermoset epoxy composition according to according to any one or more of the preceding aspects, having at least one of: a glass transition temperature of greater than or equal to 170°C, preferably greater than or equal to 180°C, more preferably greater than or equal to 200°C; or a total transmission of greater than 50%, preferably greater than 70%, more preferably greater than 90%.
Aspect 11: An article comprising the thermoset epoxy composition of any one or more of the preceding aspects.
Aspect 12: The article of aspect 11, wherein the article is in the form of a composite, a foam, a fiber, a layer, a coating, an encapsulant, an adhesive, a sealant, a component, a prepreg, a casing, or a combination thereof.
Aspect 13: A method for the manufacture of the article of aspect 11 or 12, the method comprising: shaping the curable epoxy composition; and curing the curable epoxy composition; preferably shaping and curing the curable epoxy composition by compression molding, injection molding, transfer molding, pultrusion, resin casting, or a combination thereof.
Aspect 13a. The method of aspect 13, wherein the curing is at a temperature of 300°C or less, preferably 100°C to 250°C, more preferably 120°C to 240°C, and for a time of 6 hours or less, preferably 1 to 6 hours, more preferably 3 to 5 hours.
Aspect 14: The method of aspect 13 or 13a, wherein the shaping and curing comprises disposing the curable epoxy composition into a mold, and curing the curable epoxy composition at 150°C to 250°C in the mold.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%", etc. Disclosure of a narrower range or more specific group in addition to a broader range is not a disclaimer of the broader range or larger group.

The singular forms "a" "an," and "the" include plural referents unless the context clearly dictates otherwise. "Combinations" is inclusive of blends, mixtures, alloys, reaction products, and the like. "Or" means "and/or" unless clearly indicated otherwise by context. Reference to "an aspect" means that a particular element described in connection with the aspect is included in at least one aspect described herein and may or may not be present in other aspects. A "combination thereof' is open and includes any combination comprising at least one of the listed elements, optionally together with a like or equivalent element not listed. The described elements may be combined in any suitable manner in the various aspects.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "hydrocarbyl" and "hydrocarbon" refer broadly to a monovalent group containing carbon and hydrogen, optionally with 1 to 3 heteroatoms such as a halogen, N, O, S, Si, P, or a combination thereof. Hydrocarbyl can be alkyl, cycloalkyl, alkenyl, cycloalkenyl, aryl, alkylaryl, or arylalkyl as defined below. The term "hydrocarbylene" refers to a divalent hydrocarbyl group. Hydrocarbylene can be alkylene, cycloalkylene, arylene, alkylarylene, or arylalkylene as defined below. The term "alkyl" means a branched or straight chain, saturated monovalent aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least two carbons joined by a carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkyl" means a non-aromatic monovalent monocyclic or multicyclic hydrocarbon group having at least three carbon atoms. "Cycloalkylene" means a divalent cycloalkyl group. "Cycloalkenyl" means a monovalent group having one or more rings and one or more carbon-carbon double bonds in the ring, wherein all ring members are carbon (e.g., cyclopentenyl and cyclohexenyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group. "Aryloxy" means an aryl group with the indicated number of carbon atoms attached through an oxygen bridge (-O-). "Amino" means a monovalent radical of the formula -NRR' wherein R and R' are independently hydrogen or a C₁₋₃₀ hydrocarbyl, for example a C₁₋₂₀ alkyl group or a C₆₋₃₀ aryl group. "Halogen" or "halogen atom" means a fluorine, chlorine, bromine, or iodine atom. The prefix "halo" means a group or compound including one more of a fluoro, chloro, bromo, or iodo substituents. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. The suffix "oxy" indicates that the open valence of the group is on an oxygen atom and the suffix "thio" indicates that the open valence of the group is on a sulfur atom.

Unless substituents are otherwise specifically indicated, each of the foregoing groups can be unsubstituted or substituted, provided that the normal valence of the substituted atom is not exceeded, and that the substitution does not significantly adversely affect the manufacture, stability, or desired property of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g, toluyl), C₆₋₁₀ aryloxy (e.g., phenoxy), C₄₋₁₂ heterocycloalkyl, C₃₋₁₂ heteroaryl, C₁₋₆ alkylthio, C₁₋₆ alkylsulfinyl, C₁₋₆ alkylsulfonyl (-S(=O)₂-alkyl), C₆₋₁₂ arylsulfonyl (-S(=O)₂-aryl), or tosyl (CH₃C₆H₄SO₂-). When the substituent is oxo (i.e., =O), then two hydrogens on the atom are replaced. When a compound is substituted, the indicated number of carbon atoms is the total number of carbon atoms in the compound or group, excluding those of any substituents. For example, the group -CH₂CH₂CN is a C₂ alkyl group substituted with a cyano substituent.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A thermoset epoxy composition, comprising a cured product of a curable epoxy composition comprising:
100 parts by weight of an epoxy resin composition comprising one or more epoxy resins, each independently having an epoxy equivalent weight of at least 2;
30 to 200 parts by weight of an aromatic dianhydride curing agent of the formula 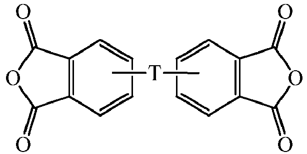 wherein T is -O-, -S-, -C(O)-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof; and
0.1 to 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen,
wherein the aromatic dianhydride curing agent is soluble in the epoxy resin composition, and the curable epoxy composition does not contain a monoanhydride.

2. The thermoset epoxy composition of claim 1, wherein the curable epoxy composition is substantially free of solvent.

3. The thermoset epoxy composition of any one or more of the preceding claims, wherein a stoichiometric ratio between the aromatic dianhydride curing agent and the epoxy resin composition is 0.1:1 to 2.0:1, preferably 0.4:1 to 1.2:1, more preferably 0.6:1 to 1:1.

4. The thermoset epoxy composition of any one or more of the preceding claims, wherein the epoxy resin composition comprises a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof.

5. The thermoset epoxy composition of any one or more of the preceding claims, wherein T is -O- or a group of the formula -O-Z-O- wherein Z is of the formula 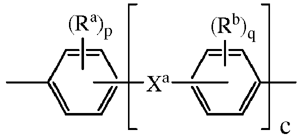 wherein
R^{a} and R^{b} are each independently the same or different, and are a halogen atom or a monovalent C₁₋₆ alkyl group,
X^{a} is a single bond, -O-, -S-, -S(O)-, -S(O)₂-, -C(O)-, or a C₁₋₁₈ organic bridging group, and
p, q, and c are each independently integers of 0 to 4.

6. The thermoset epoxy composition 5, wherein Z is a divalent group of formula 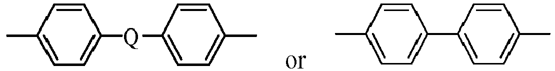 wherein Q is -O-, -S-, -C(O)-, -SO₂-, -SO-, -P(R^{c})(=O)- wherein R^{c} is a C₁₋₈ alkyl or C₆₋₁₂ aryl, or -C_{y}H_{2y}- wherein y is an integer from 1 to 5 or a halogenated derivative thereof, preferably wherein Q is 2,2-isopropylidene.

7. The thermoset epoxy composition of any one or more of the preceding claims, wherein the epoxy resin composition comprises bisphenol-A diglycidyl ether and the aromatic dianhydride curing agent comprises bisphenol-A dianhydride.

8. The thermoset epoxy composition of any one or more of the preceding claims, wherein the heterocyclic accelerator comprises a C₃₋₄ five-membered ring wherein the ring heteroatoms are one or two nitrogen atoms; preferably a C₃ five-membered ring wherein the ring heteroatoms are nitrogen atoms.

9. The thermoset epoxy composition of any one or more of the preceding claims, wherein the curable epoxy composition further comprises at least one of
a cure accelerator different from the heterocyclic accelerator; or
an additive composition, preferably wherein the additive composition comprises a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the epoxy resins, or a combination thereof.

10. The thermoset epoxy composition of any one or more of the preceding claims, wherein the curable epoxy composition is manufactured by:
combining the epoxy resin composition and the aromatic dianhydride curing agent at a temperature of 100°C to 200°C, preferably 120 to 190°C, more preferably 130 to 180°C, to provide a reaction mixture;
cooling the reaction mixture to less than 100°C; and
adding the heterocyclic accelerator to the reaction mixture to provide the curable epoxy composition;
preferably wherein the reaction mixture is substantially free of solvent.

11. The thermoset epoxy composition of any one or more of the preceding claims, having at least one of:
a glass transition temperature of greater than or equal to 170°C, preferably greater than or equal to 180°C, more preferably greater than or equal to 200°C, as determined by dynamic mechanical analysis; or
a total transmission of greater than 50%, preferably greater than 70%, more preferably greater than 90%.

12. An article comprising the thermoset epoxy composition of any one or more of the preceding claims, preferably wherein the article is in the form of a composite, a foam, a fiber, a layer, a coating, an encapsulant, an adhesive, a sealant, a component, a prepreg, a casing, or a combination thereof.

13. A method for the manufacture of the article of claim 12, the method comprising:
shaping the curable epoxy composition; and
curing the curable epoxy composition,
preferably wherein the curing is a temperature of 300°C or less, preferably 100°C to 250°C, more preferably 120°C to 240°C, and for a time of 6 hours or less, preferably 1 to 6 hours, more preferably 3 to 5 hours.

14. The method of claim 13, wherein the shaping and the curing of the curable epoxy composition comprises compression molding, injection molding, transfer molding, pultrusion, resin casting, or a combination thereof.

15. The method of claim 13 or 14, wherein the shaping and the curing comprises disposing the curable epoxy composition into a mold, and curing the curable epoxy composition at 150°C to 250°C in the mold.
